# EUROPEAN PATENT SPECIFICATION

(11) **EP 2 949 824 B1**
(45) Date of publication and mention of the grant of the patent: **04.11.2020**
(21) Application number: 15275065.9
(22) Date of filing: 13.03.2015
(51) Int. Cl.: E03C 1/06, E03C 1/02, F16L 3/00

(54) **HOSE NUT, WATER HOSE ASSEMBLY COMPRISING THE HOSE NUT AND SHOWER SYSTEM COMPRISING THE WATER HOSE ASSEMBLY**
SCHLAUCHMUTTER, WASSERSCHLAUCHANORDNUNG MIT DER SCHLAUCHMUTTER UND DUSCHSYSTEM MIT DER WASSERSCHLAUCHANORDNUNG
ÉCROU DE TUYAU, ENSEMBLE DE TUYAU D'EAU LE COMPRENANT ET SYSTÈME DE DOUCHE COMPRENANT L'ENSEMBLE DE TUYAUX D'EAU

(30) Priority: 28.05.2014 US 201462003629 P; 09.03.2015 DE 202015101159 U
(43) Date of publication of application: 02.12.2015
(73) Proprietor: Chan, Chesta, North Point, Hong Kong (CN)
(72) Inventor: Chan, Chesta, North Point, Hong Kong (CN)
(74) Representative: Potter Clarkson

(56) References cited:
- EP-A1- 0 423 644
- WO-A1-2009/019491
- DE-A1- 10 030 644
- DE-A1-102006 056 511
- DE-U1- 9 300 418
- KR-A- 20120 035 521

## Description

### Technical Field of the Invention

This invention relates generally to fittings used for a shower network system and, more particularly, to a hose nut for connecting a shower head to a water hose, to a water hose assembly comprising the hose nut and to a shower system comprising the water hose assembly. The fittings of the invention allow to eliminate the need of drilling holes on the wall and of utilizing screws/bolts to mount the shower system.

### Background of the Invention

Current shower systems typically comprise a water hose, one end of which is connected to a faucet and the other end of which is connected to a shower head. The shower head is usually held by a shower head holder mounted on the wall by fasteners such as screws/bolts for firmly securing the shower head onto the wall.

A common feature of this type of wall-mounted shower head is that the mounting of the shower head requires one or more holes to be drilled on the wall or even surface. By doing this, the wall surface would definitely be damaged and affected. Another disadvantage of this shower head is that it tends to be labor intensive to screw the shower head holder on the wall in place by screwing the screws and bolts or remove the holder from the wall. This is not a satisfactory task.

DE 93 00 418 U1 discloses a shower with a shower head connected to a water supply and held by a mounting portion. The mounting portion is mounted on a plate, which consists of a magnetic conductive metal, by means of a magnetic force acting on the plate thereby allowing the slidable movement of the mounting section on the plate.

DE 10 2006 056511A1 discloses a guiding device for use in a shower head holder, which is able to guide two objects to each other in a mutual manner. The guiding device has at least two successively arranged magnets arranged, along a straight line or in a circle, on the guide surfaces which are movable relative to each other. The shower head is held by high magnetic forces.

Therefore, the invention entails the task of creating a simple and cost-effective shower system comprising a hose nut for a shower head that is able to be surely and stably attached onto a wall or even surface. The hose nut according to the invention eliminates the use of any kind of fasteners, such as screws/bolts and the need of drilling holes on the wall, with a consequence of maintaining the surface of the wall or even surface not to be damaged or affected. The shower system also allows easy adjustment of the height of the shower head, preferably by one hand, which is simple in structure.

### Summary of the Invention

The present invention has been developed to fulfill the needs noted above and therefore has a principle object of providing a hose nut for connecting a shower head to a water hose, which hose nut can be easily attached to the wall without any damage to the wall and the position of which can be conveniently adjusted. The present invention also aims to provide a water hose assembly comprising such a hose nut. Furthermore, the present invention aims to provide a shower system comprising said water hose assembly.

These and other objects are satisfied by the present invention, which provides a hose nut for connecting a shower head to a water hose, comprising a nut body having a throughbore formed therein, the body comprising: a lower portion for receiving at least a part of the water hose; a transition portion immovably secured to the lower portion; an upper portion for connection to the shower head and arranged on the transition portion in such a manner that the upper portion is rotatable relative to the transition portion around an axis of the upper portion; and at least one magnetic element mounted on a side of the lower portion, the magnetic element being selected such that it is slidably attached to a holding device on a wall for hanging the shower head on the wall by a magnetic attraction force generated between the magnetic element and the holding device, wherein the hose nut further comprises a locking mechanism for locking the upper portion with the shower head at a desirable angle and preventing the rotation of the upper portion relative to the transition portion around the axis of the upper portion; and the locking mechanism comprises a button, and a stopper coupled to the button, the stopper being configured to engage with the upper portion thereby creating a lock therebetween for prevention of the rotation of the upper portion when the button is released, and to disengage from the upper portion to allow the rotation of the upper portion when the button is pressed; and wherein the stopper has at least one tooth on an inner wall surface thereof, wherein the at least one tooth is able to engage with one of a plurality of recesses circumferentially formed on an outer surface of a bottom of the upper portion when the button is released, and the at least one tooth of the stopper is forced to disengage from the recess on the bottom of the upper portion when the button is pressed.

In a preferred embodiment of the present invention, the hose nut may further comprise a mandrel assembly comprising a top flange having a central throughbore, and a mandrel extending downwardly from the top flange and having a central axially aligned through bore with the throughbore of the top flange to define a flow bore for water to pass through the mandrel assembly, wherein the mandrel assembly may be disposed within the throughbore of the nut body, with the flow bore of the mandrel assembly in communication with the throughbore of the nut body.

The upper portion of the nut body may comprise a shoulder extending inwardly from an inner surface of the throughbore of the upper portion, the shoulder defining an opening that is configured for allowing passage of the mandrel to be fixed to the transition portion of the nut body but preventing the top flange from passing therethrough, such that the upper portion is rotatable about the mandrel assembly relative to the transition portion.

The transition portion may have internal threads formed on the inner surface of the throughbore thereof for mating engagement with corresponding threads formed on an outside of the mandrel of the mandrel assembly.

A first O-ring seal may be placed between a bottom surface of the top flange of the mandrel assembly and the shoulder of the upper portion of the nut body.

A second O-ring seal may be placed between a top surface of the top flange of the mandrel assembly and the shower head.

The at least one magnetic element may be recessed in an undercut portion formed on the side of the lower portion of the nut body and held by a holder which is configured to define together with a surface of the undercut portion a space in which the at least one magnetic element is enclosed.

The holder for holding the at least one magnetic element may be provided to be flush with an outer surface of the lower portion of the nut body.

In a preferred embodiment of the present invention, the transition portion may be accommodated within the lower portion.

In a preferred embodiment of the present invention, a cover portion may extend upwardly from a top of the lower portion to form a one-piece housing of the hose nut, and the upper portion is accommodated within the cover portion.

In a preferred embodiment of the present invention, the transition portion and the upper portion of the nut body are provided such that the transition portion is secured at an angle to the lower portion but is aligned with the upper portion.

In another preferred embodiment of the present invention, the lower portion, the transition portion and the upper portion of the nut body are aligned.

The upper portion may have internal threads formed on the inner surface of the throughbore thereof for mating engagement with corresponding threads formed on an outside of the shower head. Alternatively, the upper portion may be connected to the shower head by snap fit.

In a preferred embodiment of the present invention, the hose nut may further comprise a hose adapter connected to the lower portion of the nut body, enabling connection of the hose nut to different water hoses.

In a preferred embodiment of the present invention, the at least one magnetic element may be a flat magnet.

A third O-ring seal may be provided between the hose nut and the water hose.

In a preferred embodiment of the present invention, the hose nut may further comprise a buffering pad mounted on an outer side surface of the holder, which surface is to be attached to the holding device on the wall for hanging the shower head; and the buffering pad is capable of increasing a friction between the outer side surface of the magnetic element holder and the holding device to reinforce the attachment therebetween. Preferably, the buffering pad is made of rubber.

A pair of posts may extend upwardly from a top of the holder and the stopper may be pivotally mounted between the pair of posts in such a manner that, when the button is pressed, the stopper is pushed by the button to pivot downwardly causing the at least one tooth of the stopper to disengage from the recess on the bottom of the upper portion.

The stopper may comprise an arc-shaped portion arranged under the upper portion, and the at least one tooth may be formed on an inner surface of the arc-shaped portion.

The locking mechanism may further comprise a spring compressed under the stopper to constantly apply an upward force to the stopper, such that when the button is released, the stopper is forced by the spring to pivot upwardly, causing the at least one tooth of the stopper to engage with the recess on the bottom of the upper portion.

In a preferred embodiment of the present invention, the magnetic element holder is made of a high density plastic material to maintain the magnetic attraction force between the magnetic element and the holding device.

A second aspect of the present invention provides a water hose assembly for connecting a faucet and a shower head, comprising a water hose, and a hose nut of the present invention in connection with one end of the water hose.

In a preferred embodiment of the present invention, the water hose may be integral with the hose nut.

A third aspect of the present invention provides a shower system comprising: a water hose assembly of the present invention, a shower head, and a holding device mounted on a wall for hanging the shower head on the wall by a magnetic attraction force generated between the magnetic element and the holding device.

In a preferred embodiment of the present invention, the holding device may be provided as a metallic or magnetic bar, or as a metallic or magnetic panel, such that the hose nut is able to be slidably attached to the bar or the panel at different heights or on different positions.

The bar or the panel may be mounted on the wall with an adhesive, and may have a longitudinal slot into which the at least one magnetic element of the hose nut is inserted, thereby the hose nut is guided to slide in the slot.

In contrast to the shower systems available in the prior art, the shower system of the invention utilizes the magnetic attraction force generated between the hose hut and the magnetic bar or panel and eliminates the need of drilling holes on the wall and employing the screws and bolts, and thus leaving the wall to be unaffected. Further, adjustment of the position of the shower head is exceedingly simple owing to the fact that it is slidably hanged up on the wall conveniently and easily. Therefore, the shower system according to the invention is relatively simple in configuration, low in cost and fast to mount.

Apart from the above, the invention may have the following advantages:
- the hose nut is able to turn the shower head to adapt to different inclinations of the handle of the shower head;
- the hose nut is configured to be fitted into the metallic bar or panel according to the desired angle of the shower head; and
- the hose nut and thus the shower head may be slidable continuously along the bar or panel.

### Brief Description of the Drawings

Fig. 1 is a perspective view of a hose nut according to an example, not covered by the claims, connected to a water hose.
Figs. 2A-2C are front, side, and top views, respectively, of the hose nut shown in Fig. 1.
Fig. 3 is an exploded perspective view of the hose nut shown in Fig. 1.
Fig. 4 is a perspective view of a hose nut according to an example, not covered by the claims, connected to a water hose.
Figs. 5A-5C are front, side, and top views, respectively, of the hose nut shown in Fig. 4.
Fig. 6 is an exploded perspective view of the hose nut shown in Fig. 4.
Figs. 7A-7C are top, front and bottom views, respectively, of the lower portion of the hose nut shown in Fig. 4.
Figs. 7D and 7E are cross-sectional views of the lower portion shown in Fig. 7C taken along the line A-A and B-B, respectively.
Fig. 8A is a top view of the upper portion of the hose nut shown in Fig. 4.
Fig. 8B is a partial cross-sectional view of the upper portion shown in Fig. 8A taken along the line A-A.
Fig. 9A is a top view of the mandrel assembly of the hose nut shown in Fig. 4.
Fig. 9B is a partial cross-sectional view of the mandrel assembly shown in Fig. 9A taken along the line A-A.
Figs. 10A and 10B are top and bottom views, respectively, of the transition portion of the hose nut shown in Fig. 4.
Fig. 10C is a cross-sectional view of the transition portion shown in Fig. 10A taken along the line A-A.

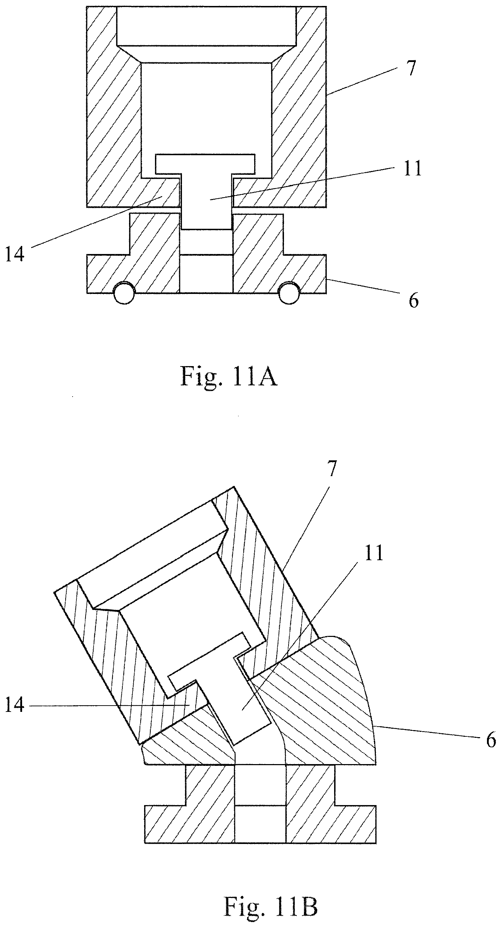

Fig. 11A is a cross-sectional view of the upper portion, the mandrel assembly and the transition portion of the hose nut shown in Fig. 1.
Fig. 11B is a cross-sectional view of the upper portion, the mandrel assembly and the transition portion of the hose nut shown in Fig. 4.
Fig. 12 is a cross-sectional view of a hose nut according to an example not covered by the claims.
Fig. 13 is an exploded perspective view of the hose nut shown in Fig. 12.
Figs. 14A and 14B are perspective views of a hose nut according to an embodiment of the present invention.
Fig.15 is an exploded perspective view of the hose nut shown in Figs. 14A and 14B.
Fig. 16A is a side view of the hose nut shown in Figs. 14A and 14B with the integral housing removed when the button is not pressed.
Fig. 16B is a side view of the hose nut shown in Figs. 14A and 14B with the integral housing removed when the button is pressed.
Fig. 16C is partial perspective view of the hose nut shown in Figs. 14A and 14B showing the tooth on the stopper and the recesses on the upper portion.
Fig. 17 is a cross-sectional view of the hose nut shown in Figs. 14A and 14B.
Fig. 18 is a perspective view of the adaptor of a hose nut and a water hose according to an embodiment of the present invention.
Fig. 19 is a perspective view of a shower system according to an embodiment of the present invention.

### Detailed Description of the Invention

While this invention is illustrated and described in preferred embodiments, the hose nut of the present invention may be produced in many different configurations, sizes, forms and materials.

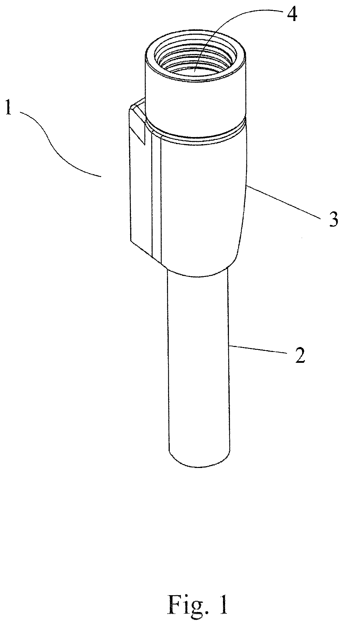

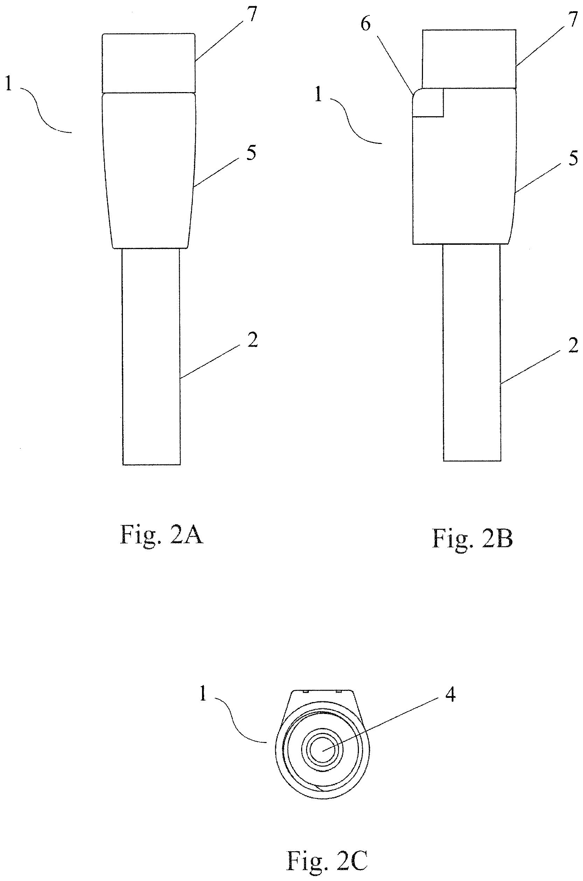

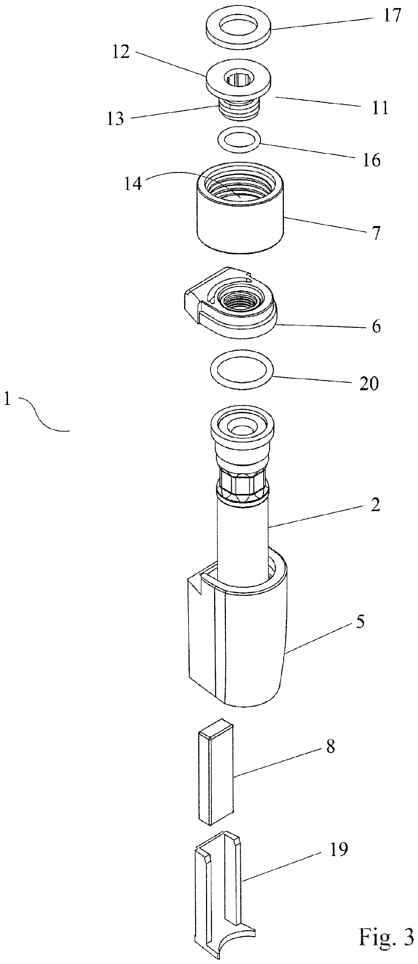

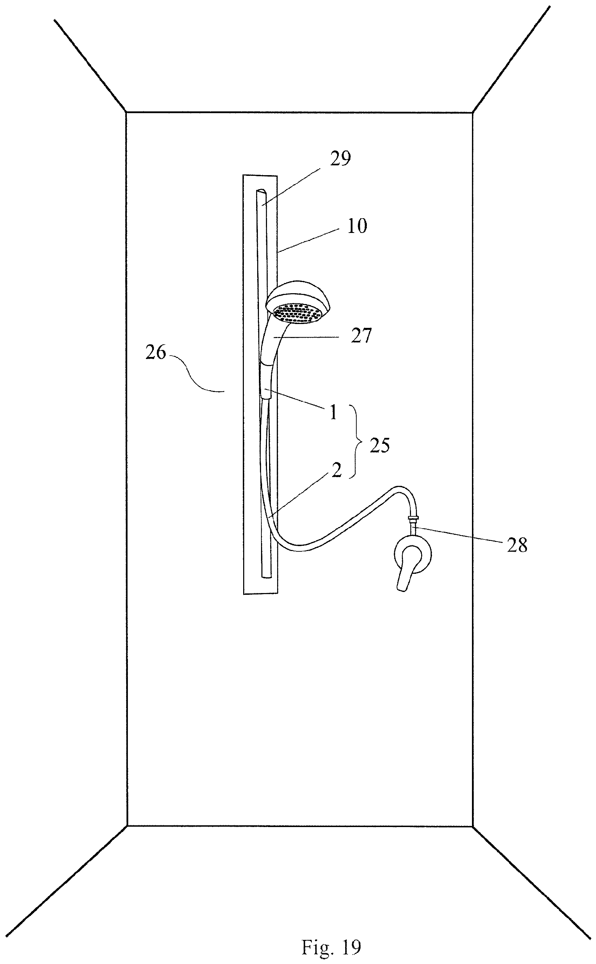

Referring now to the drawings, Figs. 1-3 illustrate a hose nut 1 according to a first example not covered by the claims. As shown in Fig. 3, the hose nut 1 comprises a nut body 3 having a throughbore 4 formed therein. The nut body 4 comprises a lower portion 5, a transition portion 6, an upper portion 7 and a magnetic element 8, preferably a flat magnet, mounted on a side of the lower portion 5. At least a part, for example an end portion, of the water hose 2, is received in the lower portion. The transition portion 6 is immovably secured to the lower portion 5, and the end portion of the water hose 2 is immovably secured to the transition portion 6, both by any one of the common manners in the art, such as threads and snap fit. The upper portion 7 for connection to a shower head (not shown) is arranged on the transition portion 6 in such a manner that the upper portion 7 is rotatable relative to the transition portion 6 around an axis 9 of the upper portion 7. The manner in which the upper portion 7 is rotatably connected to the transition portion 6 will be described in detail hereinbelow. In order to connect the upper portion 7 to the shower head, the upper portion 7 has internal threads formed on the inner surface of the throughbore thereof for mating engagement with corresponding threads formed on an outside of the shower head. In order to hang the shower head on a wall, a holding device 10 (see Fig. 19), such as a metallic or magnetic bar or panel, is mounted on the wall, and the hose nut 1 of the present invention is slidably attached to the holding device 10 by a magnetic attraction force generated between the magnetic element 8 and the holding device 10. The holding device may be made of any material suitable to generate the magnetic attraction with respect to the magnetic element 8.

As shown in Fig. 3, in order to rotatably connect the upper portion 7 to the transition portion 6, the hose nut 1 further comprises a mandrel assembly 11 comprising a top flange 12 and a mandrel 13 extending downwardly from the top flange 12. The top flange 12 has a central throughbore formed therein, and the mandrel 13 has a central throughbore axially aligned with the throughbore of the top flange 12. The central throughbores of the top flange and the mandrel define a flow bore for water to pass through the mandrel assembly. The mandrel assembly 11 is disposed within the throughbore 4 of the nut body 3, with the flow bore of the mandrel assembly in communication with the throughbore of the nut body 3. The upper portion 7 of the nut body 3 comprises a shoulder 14 extending inwardly from an inner surface of the throughbore of the upper portion 7. The shoulder 14 defines an opening 15 that is configured for allowing passage of the mandrel 13 to be fixed to the transition portion 6 of the nut body 3 but preventing the top flange 12 from passing therethrough, such that the upper portion 7 is rotatable about the mandrel assembly 11 relative to the transition portion 6. In this example, the opening 15 has a diameter that is larger than a diameter of the mandrel 13 but smaller than an outer diameter of the top flange 12, such that the mandrel 13 is allowed to pass through the opening 15 while the top flange 12 is not. The mandrel assembly 11 is fixed to the transition portion 6 by mating engagement between internal threads formed on the inner surface of the throughbore of the transition portion 6 and corresponding threads formed on an outside of the mandrel 13. To prevent leaking of water, a first O-ring seal 16 is placed between a bottom surface of the top flange 12 of the mandrel assembly 11 and the shoulder 14 of the upper portion 7 of the nut body 3. In other words, the first O-ring seal 16 is placed around the mandrel 13 of the mandrel assembly 11. For the same purpose, a second O-ring seal 17 is place between a top surface of the top flange 12 of the mandrel assembly 11 and the shower head, and a third O-ring seal 20 is provided between the end of the water hose 2 and the transition portion 6 of the nut body 3.

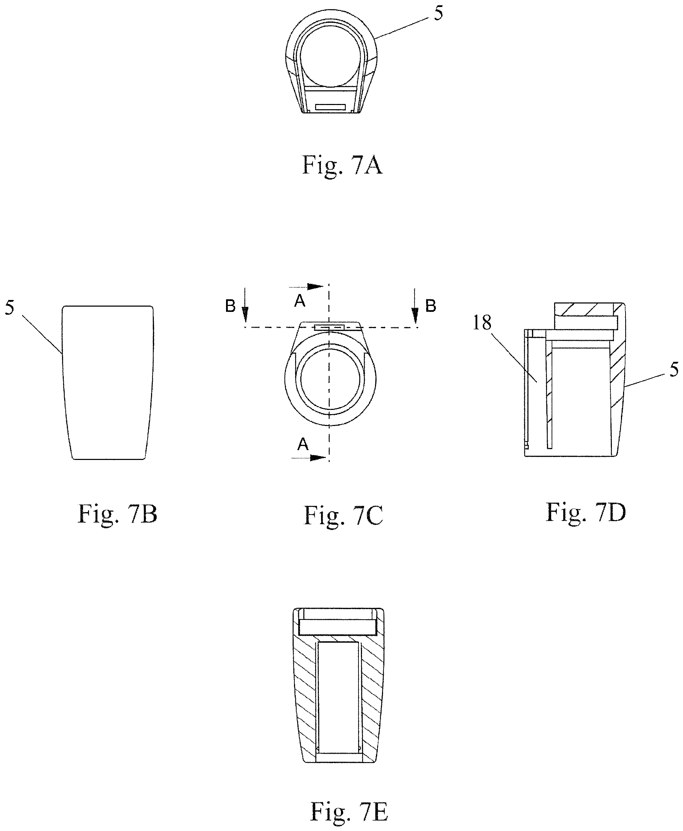

In order to mount the magnetic element 8 onto the lower portion 5, an undercut portion 18 is formed on the side of the lower portion 5 of the nut body 3 (see Fig. 7D), and the magnetic element 8 is recessed and embedded in the undercut portion. In addition, a holder 19, preferably made of high density plastic materials such as PBT (polybutylene terephthalate) and POM (polyoxymethylene), is provided to define together with a surface of the undercut portion 18 a space in which the magnetic element 8 is enclosed. In this example, the magnetic element holder 19 is in the shape of a frame comprising a flat surface and two side plates extending from the opposite ends of the flat surface, respectively. The flame and the surface of the undercut portion 18 together define a rectangular space for embedding the magnetic element 8 therein. When the two plates of the frame are mounted onto the lower portion 5 of the nut body 3, the flat surface of the holder 19 is flush with an outer surface of the lower portion 5.

The hose nut 1 and the water hose 2 thus form a water hose assembly 25 for connecting a faucet and a shower head, which can be easily and slidably attached to a holding device mounted on the wall. In some cases, the water hose assembly can be provided as an integral product, that is, with the water hose being integrally formed or prefabricated with the hose nut.

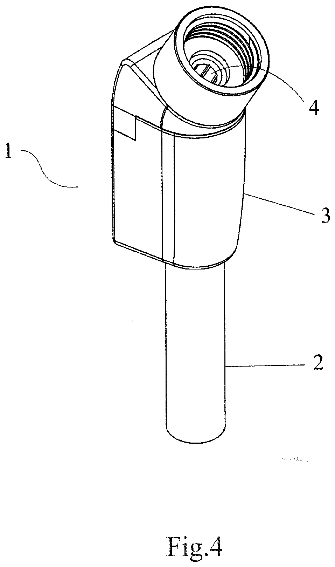

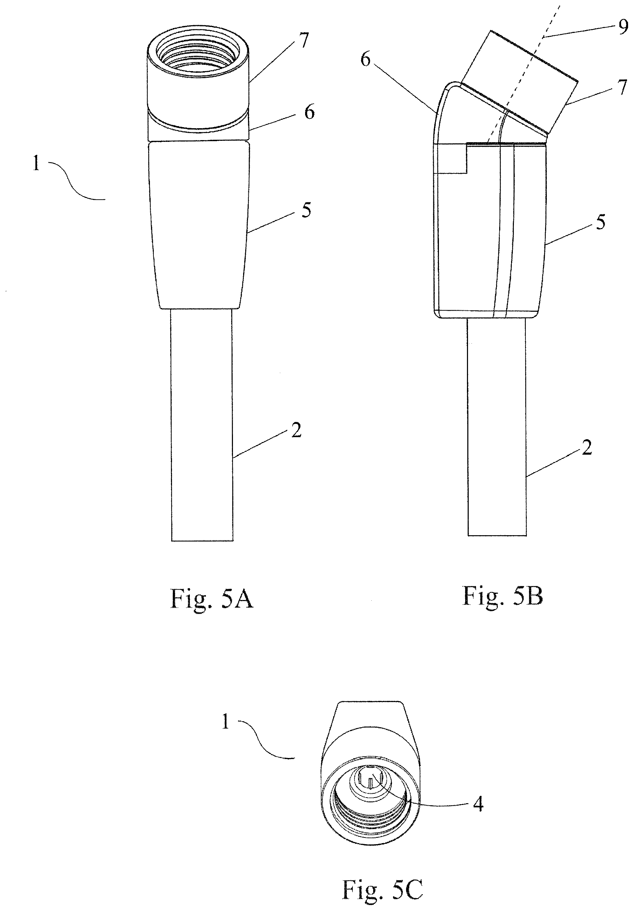

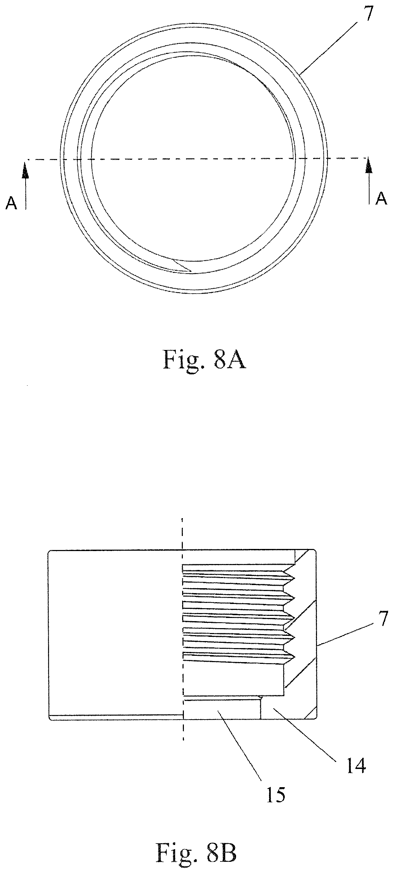

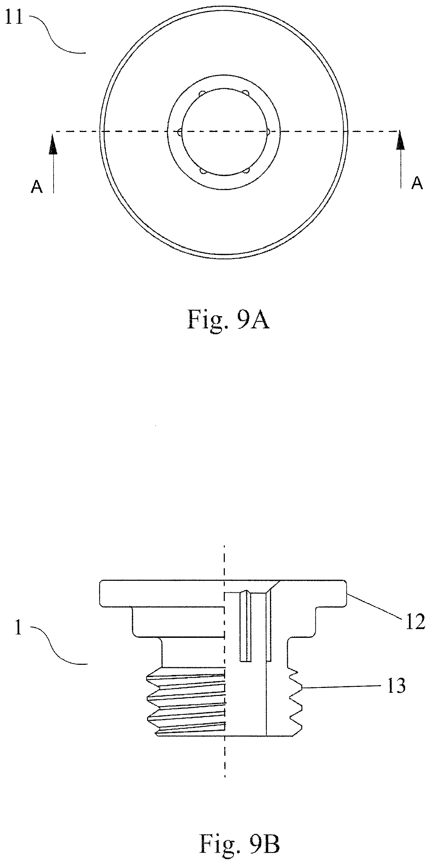

A hose nut 1 according to a second example, not covered by the claims, is illustrated in Figs. 4-10C. The second example differs from the first example in two aspects, which will be explained in detail as follows.

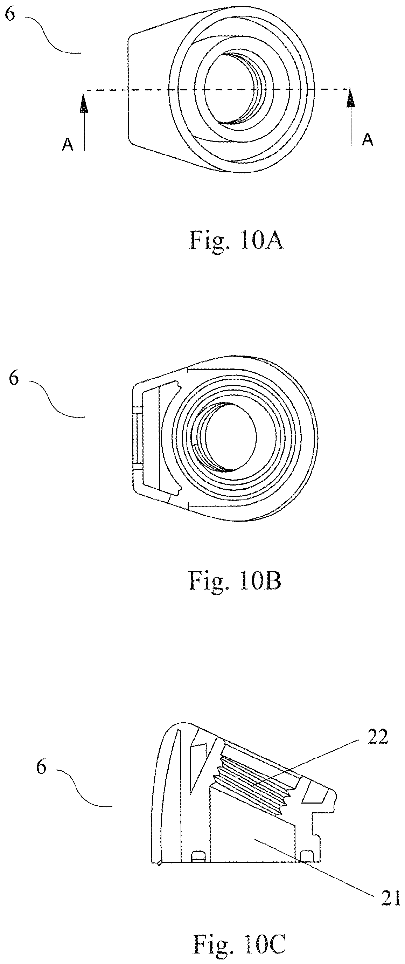

The first difference between the second and the first examples is that, in the first example, the lower portion 5, the transition portion 6 and the upper portion 7 of the nut body 3 are aligned (as best seen in Fig. 3), while in the second example, the transition portion 6 is secured at an angle to the lower portion 5 but is aligned with the upper portion 7. As shown in Fig. 10C, the throughbore of the transition portion 6 of the second embodiment is formed to comprise a lower segment 21 and an upper segment 22 at an angle with each other. The lower segment 21 is aligned with the throughbore of the lower portion 5, while the upper segment 22 is aligned with the throughbore of the upper portion 7.

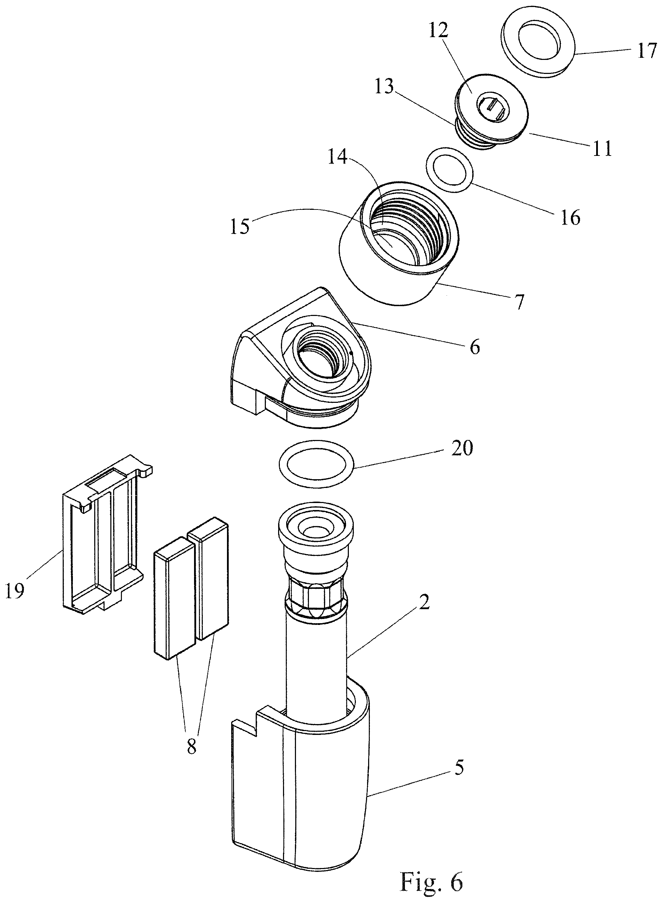

The second aspect in which the second example differs from the first example is that, in the second example, two magnetic elements 8 are provided and are mounted in parallel on the side of the lower portion 5 of the nut body 3, as shown in Fig. 6. Correspondingly, the holder 19 is formed to comprise two compartments for accommodating the two magnetic elements respectively. Those skilled in the art will understand that the more magnetic elements are provided, the stronger the magnetic attraction force between the magnetic elements and the holding device will be. Therefore, the number of magnetic elements can be adjusted according to practical conditions, such as the total weight of the hose nut, without departing from the scope of the present invention.

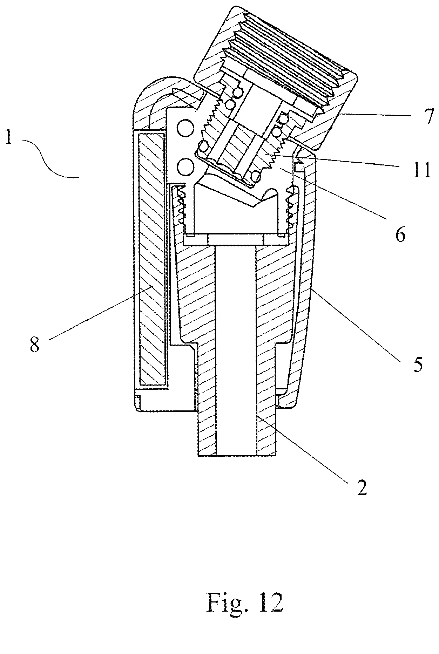

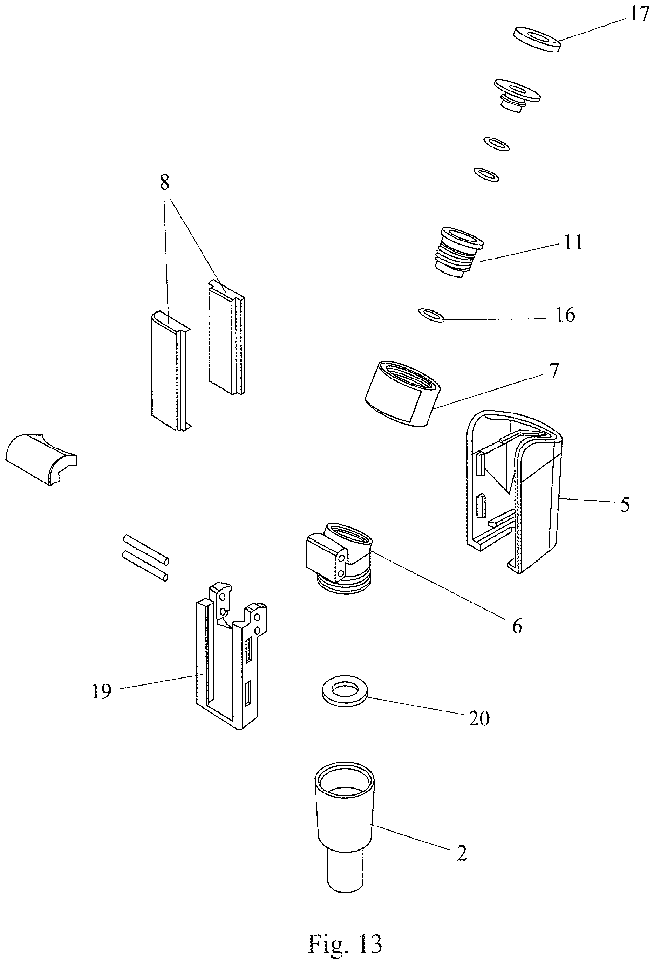

Figs. 12 and 13 illustrate a hose nut according to a third example, not covered by the claims, which differs from the second example only in that the transition portion 6 is accommodated within the lower portion 5, instead of being placed on top of the lower portion 5. Such a configuration provides a more compact structure and appearance for the hose nut.

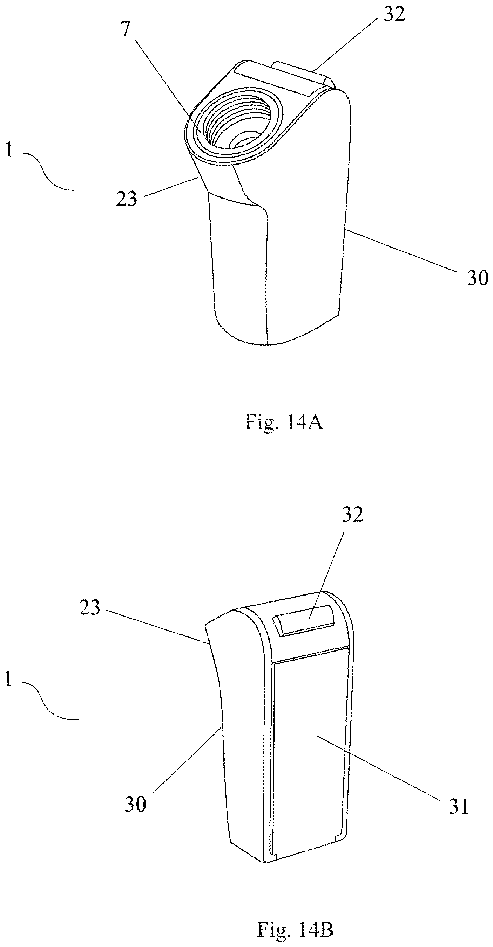

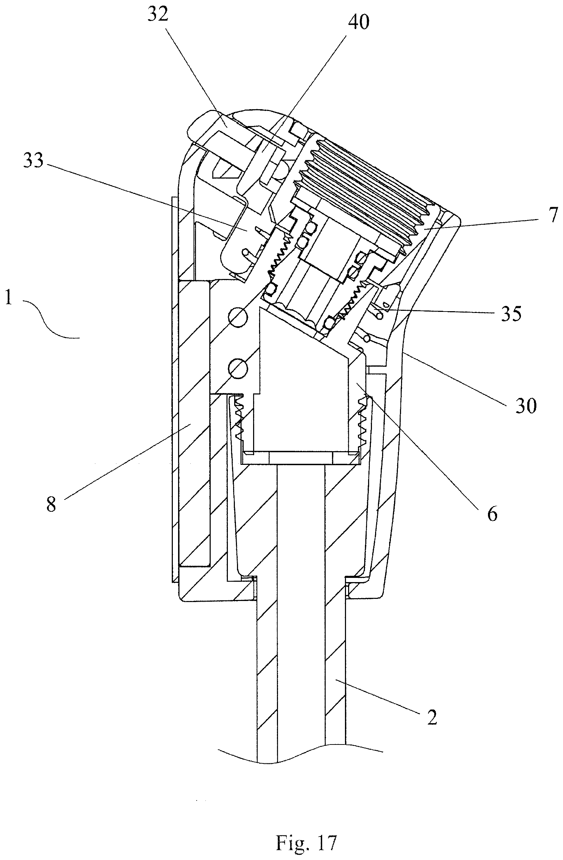

Figs. 14A-17 illustrate a hose nut according to an embodiment of the present invention, which differs from the third example in that a cover portion 23 extends upwardly from a top of the lower portion 5 to form a one-piece housing 30 of the hose nut, in which housing the upper portion 7, the transition portion 6, the lower portion 5 and other components of the hose nut are all received, resulting in an even more compact structure and aesthetically desirable appearance for the hose nut. In addition, a locking mechanism is provided to lock the upper portion with the shower head at a desirable angle and prevent the rotation of the upper portion relative to the transition portion around the axis of the upper portion.

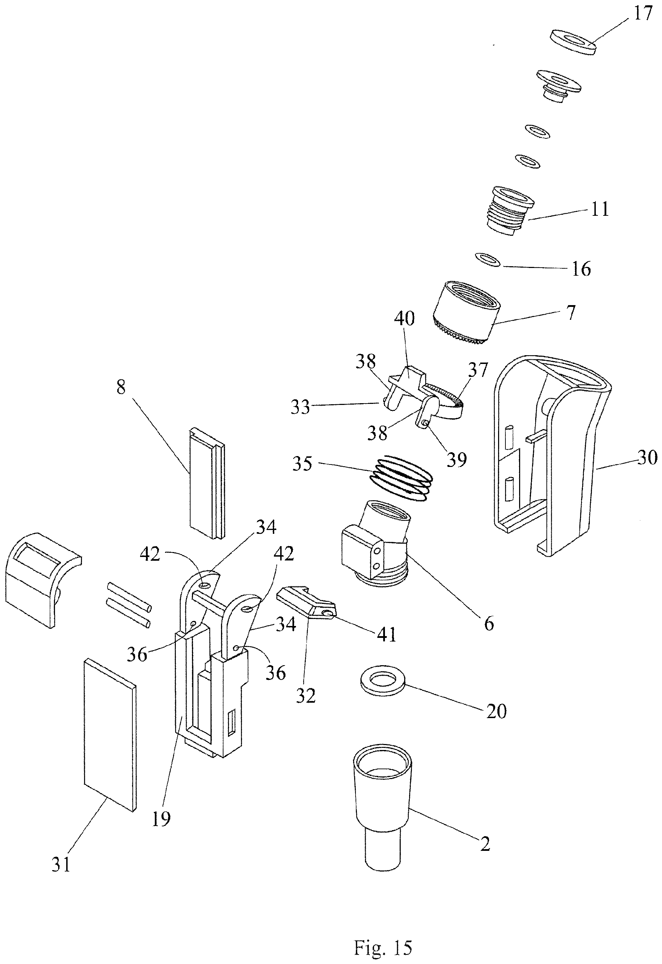

As shown in Figs. 15-17, the locking mechanism comprises a button 32, a stopper 33 coupled to the button 32, a pair of posts 34 and a spring 35. The stopper is configured to engage with the upper portion thereby creating a lock therebetween for prevention of the rotation of the upper portion when the button is released, and to disengage from the upper portion to allow the rotation of the upper portion when the button is pressed.

In particular, the pair of posts 34 are integrally formed with the holder 19 and extend upwardly from a top of the holder 19 on opposite sides thereof. A hole 36 is drilled on each of the posts 34. The stopper 33 comprises an arc-shaped portion 37, a leg 38 extending downwardly from each of the two ends of the arc-shaped portion 37, and a pin 39 formed on an outer surface of each of the two legs 38. The two pins 39 are inserted into the two holes 36, respectively, such that the stopper 33 is pivotally mounted between the pair of posts 34. The stopper 33 further comprises a baffle plate 40 connecting the two ends of the arc-shaped portion 37, which baffle plate abuts against the button 32. The button 32 is movably mounted between the pair of posts 34 via a pair of protrusions 41 formed on opposite sides of the button 32 and received in a pair of slits 42 formed on the pair of posts 34, respectively. The slits 42 are sized to allow for free movement of the protrusions 41 therein along the length of the slits 42, when the button 32 is pressed or released. The length of the slits 42 is long enough to allow the button 32 to push the stopper 33 to completely disengage from the upper portion 7.

A plurality of teeth 43 are formed on an inner surface of the arc-shaped portion 37 of the stopper 33, which teeth are provided to be able to engage with a plurality of respective recesses 44 formed on a circumference of a bottom of the upper portion 7 to prevent the rotation of the upper portion 7. Those skilled in the art will understand that, in order to prevent the rotation of the upper portion 7, merely one tooth needs to be formed on the inner surface of the arc-shaped portion 37. The plurality of teeth 43 are provided in this embodiment to demonstrate the optimal effect of locking the upper portion 7. The spring 35 is arranged and compressed under the arc-shaped portion 37 of the stopper 33 to constantly apply an upward force to the stopper 33.

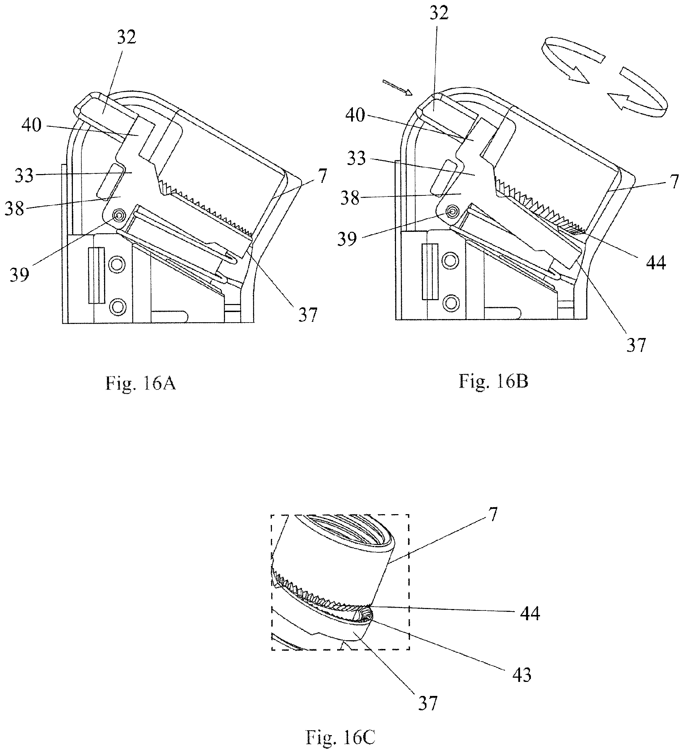

As best seen in Figs. 16B and 16C, when the button 32 is pressed to move inwardly, it pushes against the baffle plate 40 of the stopper 33, forcing the stopper 33 to pivot downwardly to cause the teeth 43 on the inner surface of the arc-shaped portion 37 of the stopper 33 to disengage from the recesses 44 on the bottom of the upper portion 7, which allows for rotation of the upper portion 7 relative to the transition portion 6. When the button 32 is released, as shown in Fig. 16A, the stopper 33 is forced by the spring 35 to pivot upwardly to cause the teeth 43 to engage with the recesses 44, thereby locking the upper portion 7 and preventing the upper portion 7 to rotate relative to the transition portion 6. Preferably, a depressed portion is formed on a front side of the button 32 to receive the baffle plate 40 of the stopper 33, thereby preventing the stopper 33 from swaying to the left or to the right, and providing a higher stability of the locking mechanism.

As a result of the locking mechanism discussed above, when the button 32 is pressed, the upper portion is allowed to rotate relative to the transition portion around the axis of the upper portion. When the button 32 is released, the rotation of the upper portion is prevented, thereby locking the shower head at a certain angle desired by the user. For example, the locking mechanism allows the user to adjust the position of shower head such that the shower head is facing right in front of the user when the shower head is hanged on the magnetic or metallic bar by the magnetic element of the hose nut.

Preferably, when the button 32 is released, part of the button extends beyond the one-piece housing 30 through a window formed on the one-piece housing 30, and when the button 32 is fully pressed, an outer surface of it becomes flush with an outer surface of the one-piece housing 30. Such a locking mechanism allows the shower head to be conveniently rotated and to be fixed at a certain desired angle.

Furthermore, as shown in Fig. 14B, a buffering pad 31, preferably made of rubber materials, is mounted on an outer side surface of the holder, which surface is to be attached to the holding device on the wall for hanging the shower head. In other words, the buffering pad 31 is provided between the hose nut and the wall, to provide a "soft touch" feeling when mounting the hose nut onto the wall. In addition, the buffering pad 31 is able to increase the friction between the mounted hose nut and the wall, thus reinforcing the attachment of the hose nut to the wall.

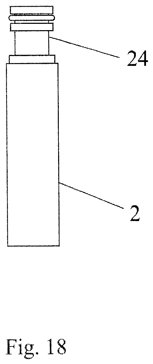

In a further embodiment of the present invention as shown in Fig. 18, in order to allow the hose nut to be connected to water hoses of different sizes, a hose adaptor 24 is provided and connected to the lower portion 5 of the nut body 3. The hose adaptor 24 allows for connection with water hoses of different sizes. The structures of the rest of the hose nut are identical to any one of the above embodiments.

Fig. 19 illustrates a shower system 26 according to a further embodiment of the present invention, which comprises a water hose assembly 25 according to any one of the above embodiments, a shower head 27 connected to the water hose assembly 25 and a holding device 10 mounted on the wall. The water hose assembly 25 comprises a hose nut 1 connected to the shower head 27 and a water hose connected to a faucet 28. The holding device 10 is provided as a metallic or magnetic bar or panel having a longitudinal slot 29 formed thereon. The at least one magnetic element 8 of the hose nut 1 is inserted into the slot 29, and is guided to slide therein as a result of the smooth surface of the slot 29. Therefore, the hose nut 1 is mounted on the holding device 10 and is slidable thereon such that its height can be easily adjusted. As magnetic attraction forces are utilized to mount the hose nut of the present invention onto the wall, the structure of the hose nut is significantly simplified compared to existing products. As a result, the weight of the hose nut is substantially reduced, such that the holding device can be mounted onto the wall simply with an adhesive, without the need for fasteners that will cause damage to the wall, such as screws or nails.

### Numerical references

- 1: hose nut
- 2: water hose
- 3: nut body
- 4: throughbore
- 5: lower portion
- 6: transition portion
- 7: upper portion
- 8: magnetic element
- 9: axis of the upper portion
- 10: holding device
- 11: mandrel assembly
- 12: top flange
- 13: mandrel
- 14: shoulder
- 15: opening
- 16: first O-ring seal
- 17: second O-ring seal
- 18: undercut portion
- 19: holder
- 20: third O-ring seal
- 21: lower segment of the throughbore of the transition portion
- 22: upper segment of the throughbore of the transition portion
- 23: cover portion
- 24: hose adaptor
- 25: water hose assembly
- 26: shower system
- 27: shower head
- 28: faucet
- 29: slot
- 30: one-piece housing
- 31: buffering pad
- 32: button
- 33: stopper
- 34: post
- 35: spring
- 36: hole
- 37: arc-shaped portion
- 38: leg
- 39: pin
- 40: baffle plate
- 41: protrusion
- 42: slit
- 43: tooth
- 44: recess

## Claims

1. A hose nut (1) for connecting a shower head (27) to a water hose (2), comprising a nut body (3) having a throughbore (4) formed therein, the nut body comprising:
a lower portion (5) for receiving at least a part of the water hose (2);
a transition portion (6) immovably secured to the lower portion (5);
an upper portion (7) for connection to the shower head (27) and arranged on the transition portion (6) in such a manner that the upper portion (7) is rotatable relative to the transition portion (6) around an axis of the upper portion (9);
at least one magnetic element (8) mounted on a side of the lower portion (5), the magnetic element (8) being adapted to be slidably attached to a holding device (10) on a wall for hanging the shower head (27) on the wall by a magnetic attraction force generated between the magnetic element (8) and the holding device (10),
**characterized in that** the hose nut (1) further comprises a locking mechanism for locking the upper portion (7) with the shower head (27) at a desirable angle and preventing the rotation of the upper portion (7) relative to the transition portion (6) around the axis of the upper portion (9);
wherein the locking mechanism comprises a button (32), and a stopper (33) coupled to the button (32), the stopper (33) being configured to engage with the upper portion (7) thereby creating a lock therebetween for prevention of the rotation of the upper portion (7) when the button (32) is released, and to disengage from the upper portion (7) to allow the rotation of the upper portion (7) when the button (32) is pressed; and
wherein the stopper (33) has at least one tooth on an inner wall surface thereof, wherein the at least one tooth (43) is able to engage with one of a plurality of recesses (44) circumferentially formed on an outer surface of a bottom of the upper portion (7) when the button (32) is released, and the at least one tooth (43) of the stopper (33) is forced to disengage from the recess (44) on the bottom of the upper portion (7) when the button (32) is pressed.

2. The hose nut (1) of claim 1, further comprising a mandrel assembly (11) comprising a top flange (12) having a central throughbore, and a mandrel (13) extending downwardly from the top flange (12) and having a central axially aligned through bore with the throughbore of the top flange (12) to define a flow bore for water to pass through the mandrel assembly (11), wherein the mandrel assembly (11) is disposed within the throughbore of the nut body (3), with the flow bore of the mandrel assembly (11) in communication with the throughbore of the nut body (3).

3. The hose nut (1) of claim 2, wherein the upper portion (7) of the nut body (3) comprises a shoulder (14) extending inwardly from an inner surface of the throughbore of the upper portion (7), the shoulder (14) defining an opening (15) that is configured for allowing passage of the mandrel (13) to be fixed to the transition portion (6) of the nut body (3) but preventing the top flange (12) from passing therethrough, such that the upper portion (7) is rotatable about the mandrel assembly (11) relative to the transition portion (6).

4. The hose nut (1) of claim 3, wherein the transition portion (6) has internal threads formed on the inner surface of the throughbore thereof for mating engagement with corresponding threads formed on an outside of the mandrel (13) of the mandrel assembly (11).

5. The hose nut (1) of claim 3, wherein a first O-ring seal (16) is placed between a bottom surface of the top flange (12) of the mandrel assembly (11) and the shoulder (14) of the upper portion (7) of the nut body (3).

6. The hose nut (1) of claim 3, wherein a second O-ring seal (17) is included, which is adapted to be placed between a top surface of the top flange (12) of the mandrel assembly (11) and the shower head (27).

7. The hose nut (1) of any one of claims 1 to 6, wherein the at least one magnetic element (8) is recessed in an undercut portion (18) formed on the side of the lower portion (5) of the nut body (3) and held by a holder (19) which is configured to define together with a surface of the undercut portion (18) a space in which the at least one magnetic element (8) is enclosed.

8. The hose nut (1) of claim 7, further comprising a buffering pad (31), preferably a rubber pad, mounted on an outer side surface of the holder (19), which surface is to be attached to the holding device (10) on the wall for hanging the shower head (27); and the buffering pad (31) is capable of increasing a friction between the outer side surface of the holder (19) of the magnetic element (8) and the holding device (10) to reinforce the attachment therebetween.

9. The hose nut (1) of claim 7 or 8, wherein the holder (19) of the magnetic element (8) is made of a high density plastic material to maintain the magnetic attraction force between the magnetic element (8) and the holding device (10).

10. The hose nut (1) of any one of claims 7 to 9, wherein the holder (19) for holding the at least one magnetic element (8) is provided to be flush with an outer surface of the lower portion (5) of the nut body (3).

11. The hose nut (1) of any one of claims 1 to 10, wherein the transition portion (6) is accommodated within the lower portion (5).

12. The hose nut (1) of any one of claims 1 to 11, wherein a cover portion (23) extends upwardly from a top of the lower portion (5) to form a one-piece housing (30) of the hose nut (1), and the upper portion (7) is accommodated within the cover portion (23).

13. The hose nut (1) of any one of claims 1 to 12, wherein the lower portion (5), the transition portion (6) and the upper portion (7) of the nut body (3) are provided such that the transition portion (6) is secured at an angle to the lower portion (5) but is aligned with the upper portion (7); or the lower portion (5), the transition portion (6) and the upper portion (7) of the nut body (3) are aligned.

14. The hose nut (1) of any one of claims 1 to 13, wherein the upper portion (7) has internal threads formed on the inner surface of the throughbore (4) thereof for mating engagement with corresponding threads formed on an outside of the shower head (27), or the upper portion (7) is adapted to be connected to the shower head (27) by snap fit.

15. The hose nut (1) of any one of claims 1 to 14, further comprising a hose adapter (24) connected to the lower portion (5) of the nut body (3), enabling connection of the hose nut (1) to different water hoses.

16. The hose nut (1) of any one of claims 1 to 15, wherein a third O-ring seal (20) is included, which is adapted to be provided between the hose nut (1) and the water hose (2).

17. The hose nut (1) of any one of claims 1 to 16, wherein a pair of posts (34) extend upwardly from a top of the holder (19) and the stopper (33) is pivotally mounted between the pair of posts (34) in such a manner that, when the button (32) is pressed, the stopper (33) is pushed by the button (32) to pivot downwardly causing the at least one tooth (43) of the stopper (33) to disengage from the recess (44) on the bottom of the upper portion (7).

18. The hose nut (1) of claim 17, wherein the stopper (33) comprises an arc-shaped portion (37) arranged under the upper portion (7), and the at least one tooth (43) is formed on an inner surface of the arc-shaped portion (37).

19. The hose nut (1) of claim 18, wherein the locking mechanism further comprises a spring (35) compressed under the stopper (33) to constantly apply an upward force to the stopper (33), such that when the button (32) is released, the stopper (33) is forced by the spring (35) to pivot upwardly, causing the at least one tooth (43) of the stopper (33) to engage with the recess (44) on the bottom of the upper portion (7).

20. A water hose assembly (25) for connecting a faucet (28) and a shower head (27), comprising a water hose (2), and a hose nut (1) according to any one of claims 1 to 19, wherein the hose nut (1) and the water hose (2) are prefabricated as one piece.

21. A shower system (26) comprising:
a water hose assembly (25) according to claim 20,
a shower head (27), and
a holding device (10) mounted on a wall for hanging the shower head (27) on the wall by a magnetic attraction force generated between the magnetic element (8) and the holding device (10).

22. The shower system (26) of claim 21, wherein the holding device (10) is provided as a metallic or magnetic bar, or as a metallic or magnetic panel, such that the hose nut (1) is able to be slidably attached to the bar or the panel at different heights of the wall or on different positions of the wall.

23. The shower system (26) of claim 22, wherein the bar or the panel is mounted on the wall with an adhesive.

24. The shower system (26) of claim 22 or 23, wherein the bar has a longitudinal slot (29) into which the at least one magnetic element (8) of the hose nut (1) is inserted, thereby the hose nut (1) is guided to slide in the slot (29).

## Patentansprüche

1. Schlauchmutter (1) zum Verbinden eines Duschkopfes (27) mit einem Wasserschlauch (2), umfassend einen Mutterkörper (3) mit einer darin ausgebildeten Durchgangsbohrung (4), wobei der Mutterkörper Folgendes umfasst:
einen unteren Abschnitt (5) zum Aufnehmen mindestens eines Teils des Wasserschlauchs (2);
einen Übergangsabschnitt (6), der unbeweglich am unteren Abschnitt (5) befestigt ist;
einen oberen Abschnitt (7) zur Verbindung mit dem Duschkopf (27) und derart am Übergangsabschnitt (6) angeordnet, dass der obere Abschnitt (7) relativ zum Übergangsabschnitt (6) um eine Achse des oberen Abschnitts (9) drehbar ist;
mindestens ein an einer Seite des unteren Abschnitts (5) angebrachtes Magnetelement (8), wobei das Magnetelement (8) dazu geeignet ist, durch eine zwischen dem Magnetelement (8) und der Haltevorrichtung (10) erzeugte magnetische Anziehungskraft verschiebbar an einer Haltevorrichtung (10) an einer Wand zum Aufhängen des Duschkopfes (27) an der Wand befestigt zu werden,
**dadurch gekennzeichnet, dass** die Schlauchmutter (1) ferner einen Verriegelungsmechanismus zum Verriegeln des oberen Abschnitts (7) mit dem Duschkopf (27) in einem gewünschten Winkel und zum Verhindern der Drehung des oberen Abschnitts (7) relativ zum Übergangsabschnitt (6) um die Achse des oberen Abschnitts (9) aufweist;
wobei der Verriegelungsmechanismus einen Knopf (32) und einen mit dem Knopf (32) gekoppelten Stopper (33) umfasst, wobei der Stopper (33) so konfiguriert ist, dass er mit dem oberen Abschnitt (7) in Eingriff kommt und dadurch eine Verriegelung dazwischen erzeugt, um die Drehung des oberen Abschnitts (7) zu verhindern, wenn der Knopf (32) gelöst ist, und um sich von dem oberen Abschnitt (7) zu lösen, um die Drehung des oberen Abschnitts (7) zu ermöglichen, wenn der Knopf (32) gedrückt wird; und
wobei der Stopper (33) mindestens einen Zahn an einer Innenwandfläche davon aufweist, wobei der mindestens eine Zahn (43) in eine von mehreren Aussparungen (44), die in Umfangsrichtung an einer Außenfläche eines Bodens des oberen Abschnitts (7) ausgebildet sind, eingreifen kann, wenn der Knopf (32) gelöst wird, und der mindestens eine Zahn (43) des Stoppers (33) gezwungen wird, sich aus der Aussparung (44) am Boden des oberen Abschnitts (7) zu lösen, wenn der Knopf (32) gedrückt wird.

2. Schlauchmutter (1) nach Anspruch 1, die ferner eine Dornanordnung (11) mit einem oberen Flansch (12) mit einer zentralen Durchgangsbohrung und einem Dorn (13) aufweist, der sich von dem oberen Flansch (12) nach unten erstreckt und eine zentrale, axial mit der Durchgangsbohrung des oberen Flansches (12) ausgerichtete Durchgangsbohrung aufweist, um eine Durchflussbohrung für den Durchfluss von Wasser durch die Dornanordnung (11) zu definieren, wobei die Dornanordnung (11) innerhalb der Durchgangsbohrung des Mutterkörpers (3) angeordnet ist, wobei die Durchflussbohrung der Dornanordnung (11) mit der Durchgangsbohrung des Mutterkörpers (3) in Verbindung steht.

3. Schlauchmutter (1) nach Anspruch 2, wobei der obere Abschnitt (7) des Mutterkörpers (3) eine Schulter (14) aufweist, die sich von einer Innenfläche der Durchgangsbohrung des oberen Abschnitts (7) nach innen erstreckt, wobei die Schulter (14) eine Öffnung (15) definiert, die so konfiguriert ist, dass sie den Durchgang des an dem Übergangsabschnitt (6) des Mutterkörpers (3) zu befestigenden Dornes (13) erlaubt, aber den oberen Flansch (12) daran hindert, dort hindurchzugehen, so dass der obere Abschnitt (7) um die Dornanordnung (11) relativ zu dem Übergangsabschnitt (6) drehbar ist.

4. Schlauchmutter (1) nach Anspruch 3, wobei der Übergangsabschnitt (6) ein Innengewinde aufweist, das an der Innenfläche der Durchgangsbohrung davon für einen Passeingriff mit einem entsprechenden Gewinde ausgebildet ist, das an einer Außenseite des Dorns (13) der Dornanordnung (11) ausgebildet ist.

5. Schlauchmutter (1) nach Anspruch 3, wobei eine erste O-Ring-Dichtung (16) zwischen einer unteren Fläche des oberen Flansches (12) der Dornanordnung (11) und der Schulter (14) des oberen Abschnitts (7) des Mutterkörpers (3) angeordnet ist.

6. Schlauchmutter (1) nach Anspruch 3, wobei eine zweite O-Ring-Dichtung (17) enthalten ist, die zwischen einer oberen Fläche des oberen Flansches (12) der Dornbaugruppe (11) und dem Duschkopf (27) angeordnet werden kann.

7. Schlauchmutter (1) nach einem der Ansprüche 1 bis 6, wobei das mindestens eine magnetische Element (8) in einen hinterschnittenen Abschnitt (18) eingelassen ist, der auf der Seite des unteren Abschnitts (5) des Mutterkörpers (3) ausgebildet ist und von einem Halter (19) gehalten wird, der konfiguriert ist, um zusammen mit einer Oberfläche des hinterschnittenen Abschnitts (18) einen Raum zu definieren, in dem das mindestens eine magnetische Element (8) eingeschlossen ist.

8. Schlauchmutter (1) nach Anspruch 7, die ferner ein Pufferkissen (31), vorzugsweise ein Gummikissen, umfasst, das an einer äußeren Seitenfläche des Halters (19) angebracht ist, wobei diese Fläche an der Haltevorrichtung (10) an der Wand zum Aufhängen des Duschkopfes (27) zu befestigen ist; und
wobei das Pufferkissen (31) eine Reibung zwischen der äußeren Seitenfläche des Halters (19) des Magnetelements (8) und der Haltevorrichtung (10) erhöhen kann, um die Bindung dazwischen zu verstärken.

9. Schlauchmutter (1) nach Anspruch 7 oder 8, wobei der Halter (19) des Magnetelements (8) aus einem Kunststoffmaterial hoher Dichte hergestellt ist, um die magnetische Anziehungskraft zwischen dem Magnetelement (8) und der Haltevorrichtung (10) aufrechtzuerhalten.

10. Schlauchmutter (1) nach einem der Ansprüche 7 bis 9, wobei der Halter (19) zum Halten des mindestens einen magnetischen Elements (8) so vorgesehen ist, dass er mit einer Außenfläche des unteren Abschnitts (5) des Mutterkörpers (3) bündig ist.

11. Schlauchmutter (1) nach einem der Ansprüche 1 bis 10, wobei der Übergangsabschnitt (6) in dem unteren Abschnitt (5) untergebracht ist.

12. Schlauchmutter (1) nach einem der Ansprüche 1 bis 11, wobei sich ein Abdeckabschnitt (23) von einer Oberseite des unteren Abschnitts (5) nach oben erstreckt, um ein einstückiges Gehäuse (30) der Schlauchmutter (1) zu bilden, und wobei der obere Abschnitt (7) in dem Abdeckabschnitt (23) untergebracht ist.

13. Schlauchmutter (1) nach einem der Ansprüche 1 bis 12, wobei der untere Abschnitt (5), der Übergangsabschnitt (6) und der obere Abschnitt (7) des Mutterkörpers (3) so vorgesehen sind, dass der Übergangsabschnitt (6) in einem Winkel zum unteren Abschnitt (5) befestigt ist, aber mit dem oberen Abschnitt (7) ausgerichtet ist; oder wobei
der untere Abschnitt (5), der Übergangsabschnitt (6) und der obere Abschnitt (7) des Mutterkörpers (3) aufeinander ausgerichtet sind.

14. Schlauchmutter (1) nach einem der Ansprüche 1 bis 13, wobei der obere Abschnitt (7) ein Innengewinde aufweist, das an der Innenfläche seiner Durchgangsbohrung (4) für einen Passeingriff mit einem entsprechenden Gewinde ausgebildet ist, das an einer Außenseite des Duschkopfes (27) ausgebildet ist, oder wobei der obere Abschnitt (7) geeignet ist, mit dem Duschkopf (27) durch eine Schnappverbindung verbunden zu werden.

15. Schlauchmutter (1) nach einem der Ansprüche 1 bis 14, die ferner einen Schlauchadapter (24) umfasst, der mit dem unteren Abschnitt (5) des Mutterkörpers (3) verbunden ist und die Verbindung der Schlauchmutter (1) an verschiedene Wasserschläuche ermöglicht.

16. Schlauchmutter (1) nach einem der Ansprüche 1 bis 15, wobei eine dritte O-Ring-Dichtung (20) enthalten ist, die geeignet ist, zwischen der Schlauchmutter (1) und dem Wasserschlauch (2) vorgesehen zu werden.

17. Schlauchmutter (1) nach einem der Ansprüche 1 bis 16, wobei sich ein Paar von Pfosten (34) von einer Oberseite des Halters (19) nach oben erstreckt und der Stopper (33) schwenkbar zwischen dem Paar von Pfosten (34) derart angebracht ist, dass, wenn der Knopf (32) gedrückt ist, der Stopper (33) durch den Knopf (32) gezwungen wird, nach unten zu schwenken, wodurch der mindestens eine Zahn (43) des Stoppers (33) aus der Aussparung (44) am Boden des oberen Abschnitts (7) gelöst wird.

18. Schlauchmutter (1) nach Anspruch 17, wobei der Stopper (33) einen bogenförmigen Abschnitt (37) aufweist, der unter dem oberen Abschnitt (7) angeordnet ist, und der mindestens eine Zahn (43) an einer Innenfläche des bogenförmigen Abschnitts (37) ausgebildet ist.

19. Schlauchmutter (1) nach Anspruch 18, wobei der Verriegelungsmechanismus ferner eine Feder (35) umfasst, die unter dem Stopper (33) zusammengedrückt ist, um ständig eine nach oben gerichtete Kraft auf den Stopper (33) auszuüben, so dass, wenn der Knopf (32) gelöst ist, der Stopper (33) durch die Feder (35) gezwungen wird, nach oben zu schwenken, wodurch der mindestens eine Zahn (43) des Stoppers (33) in die Aussparung (44) am Boden des oberen Abschnitts (7) eingreift.

20. Wasserschlauchanordnung (25) zum Verbinden eines Wasserhahns (28) und eines Duschkopfes (27), umfassend einen Wasserschlauch (2) und eine Schlauchmutter (1) nach einem der Ansprüche 1 bis 19, wobei die Schlauchmutter (1) und der Wasserschlauch (2) einstückig vorgefertigt sind.

21. Duschsystem (26), das Folgendes umfasst:
eine Wasserschlauchanordnung (25) nach Anspruch 20,
einen Duschkopf (27) und
eine an einer Wand angebrachte Haltevorrichtung (10) zum Aufhängen des Duschkopfes (27) an der Wand durch eine zwischen dem Magnetelement (8) und der Haltevorrichtung (10) erzeugte magnetische Anziehungskraft.

22. Duschsystem (26) nach Anspruch 21, wobei die Haltevorrichtung (10) als eine metallische oder magnetische Stange oder als eine metallische oder magnetische Platte vorgesehen ist, so dass die Schlauchmutter (1) an der Stange oder dem Paneel in verschiedenen Höhen der Wand oder an verschiedenen Positionen der Wand verschiebbar befestigt werden kann.

23. Duschsystem (26) nach Anspruch 22, wobei die Stange oder die Platte an der Wand mit einem Klebemittel angebracht ist.

24. Duschsystem (26) nach Anspruch 22 oder 23, wobei die Stange einen Längsschlitz (29) aufweist, in den das mindestens eine magnetische Element (8) der Schlauchmutter (1) eingesetzt ist, wodurch die Schlauchmutter (1) in dem Schlitz (29) gleitend geführt wird.

## Revendications

1. Écrou de tuyau (1) permettant de raccorder une pomme de douche (27) à un tuyau d'eau (2), comprenant un corps d'écrou (3) ayant un alésage traversant (4) formé à l'intérieur de celui-ci, le corps d'écrou comprenant :
une partie inférieure (5) destinée à recevoir au moins une partie du tuyau d'eau (2) ;
une partie de transition (6) fixée de manière inamovible à la partie inférieure (5) ;
une partie supérieure (7) destinée à être raccordée à la pomme de douche (27) et disposée sur la partie de transition (6) de telle manière que la partie supérieure (7) puisse tourner par rapport à la partie de transition (6) autour d'un axe de la partie supérieure (9) ;
au moins un élément magnétique (8) monté sur un côté de la partie inférieure (5), l'élément magnétique (8) étant adapté pour être fixé de manière coulissante à un dispositif de maintien (10) sur une paroi afin d'accrocher la pomme de douche (27) sur la paroi par une force d'attraction magnétique générée entre l'élément magnétique (8) et le dispositif de maintien (10), **caractérisé en ce que** l'écrou de tuyau (1) comprend en outre un mécanisme de verrouillage permettant de verrouiller la partie supérieure (7) avec la pomme de douche (27) à un angle souhaitable et d'empêcher la rotation de la partie supérieure (7) par rapport à la partie de transition (6) autour de l'axe de la partie supérieure (9) ;
dans lequel le mécanisme de verrouillage comprend un bouton (32) et une butée (33) couplée au bouton (32), la butée (33) étant conçue pour s'engager avec la partie supérieure (7), créant ainsi un verrou entre elles afin d'empêcher la rotation de la partie supérieure (7) lorsque le bouton (32) est relâché, et pour se désengager de la partie supérieure (7) afin de permettre la rotation de la partie supérieure (7) lorsque le bouton (32) est enfoncé ; et
dans lequel la butée (33) comporte au moins une dent sur une surface de sa paroi intérieure, dans lequel l'au moins une dent (43) est capable de s'engager avec une cavité d'une pluralité de cavités (44) formées de manière circonférentielle sur une surface extérieure d'un fond de la partie supérieure (7) lorsque le bouton (32) est relâché, et l'au moins une dent (43) de la butée (33) est forcée de se dégager de l'évidement (44) sur le fond de la partie supérieure (7) lorsque le bouton (32) est enfoncé.

2. Écrou de tuyau (1) selon la revendication 1, comprenant en outre un ensemble mandrin (11) comprenant une bride supérieure (12) ayant un alésage central, et un mandrin (13) s'étendant vers le bas à partir de la bride supérieure (12) et ayant un alésage central aligné axialement avec l'alésage traversant de la bride supérieure (12) pour définir un alésage d'écoulement pour que l'eau circule à travers l'ensemble mandrin (11), dans lequel l'ensemble mandrin (11) est disposé à l'intérieur de l'alésage traversant du corps d'écrou (3), avec l'alésage d'écoulement de l'ensemble mandrin (11) en communication avec l'alésage traversant du corps d'écrou (3).

3. Écrou de tuyau (1) selon la revendication 2, dans lequel la partie supérieure (7) du corps d'écrou (3) comprend un épaulement (14) s'étendant vers l'intérieur à partir d'une surface intérieure de l'alésage traversant de la partie supérieure (7), l'épaulement (14) définissant une ouverture (15) qui est conçue pour permettre au passage du mandrin (13) d'être fixé à la partie de transition (6) du corps d'écrou (3) mais empêchant la bride supérieure (12) de passer à travers celui-ci, de sorte que la partie supérieure (7) puisse tourner autour de l'ensemble mandrin (11) par rapport à la partie de transition (6).

4. Écrou de tuyau (1) selon la revendication 3, dans lequel la partie de transition (6) comporte des filetages internes formés sur la surface intérieure de son alésage pour un engagement d'accouplement avec des filetages correspondants formés sur l'extérieur du mandrin (13) de l'ensemble mandrin (11).

5. Écrou de tuyau (1) selon la revendication 3, dans lequel un premier joint torique (16) est placé entre une surface inférieure de la bride supérieure (12) de l'ensemble mandrin (11) et l'épaulement (14) de la partie supérieure (7) du corps d'écrou (3).

6. Écrou de tuyau (1) selon la revendication 3, dans lequel un deuxième joint torique (17) est inclus, lequel joint torique est adapté pour être placé entre une surface supérieure de la bride supérieure (12) de l'ensemble mandrin (11) et la pomme de douche (27).

7. Écrou de tuyau (1) selon l'une quelconque des revendications 1 à 6, dans lequel l'au moins un élément magnétique (8) est encastré dans une partie en contre-dépouille (18) formée du côté de la partie inférieure (5) du corps d'écrou (3) et maintenu par un support (19) qui est conçu pour définir avec une surface de la partie en contre-dépouille (18) un espace dans lequel au moins un élément magnétique (8) est enfermé.

8. Écrou de tuyau (1) selon la revendication 7, comprenant en outre un coussin de tamponnage (31), de préférence un tampon en caoutchouc, monté sur une surface latérale extérieure du support (19), laquelle surface doit être fixée au dispositif de maintien (10) sur la paroi afin d'accrocher la pomme de douche (27) ; et
le coussin de tamponnage (31) est capable d'augmenter un frottement entre la surface latérale extérieure du support (19) de l'élément magnétique (8) et le dispositif de maintien (10) afin de renforcer la fixation entre eux.

9. Écrou de tuyau (1) selon la revendication 7 ou 8, dans lequel le support (19) de l'élément magnétique (8) est constitué d'un matériau plastique haute densité afin de maintenir la force d'attraction magnétique entre l'élément magnétique (8) et le dispositif de maintien (10).

10. Écrou de tuyau (1) selon l'une quelconque des revendications 7 à 9, dans lequel le support (19) permettant de maintenir l'au moins un élément magnétique (8) est prévu pour affleurer une surface extérieure de la partie inférieure (5) du corps d'écrou (3).

11. Écrou de tuyau (1) selon l'une quelconque des revendications 1 à 10, dans lequel la partie de transition (6) est logée à l'intérieur de la partie inférieure (5).

12. Écrou de tuyau (1) selon l'une quelconque des revendications 1 à 11, dans lequel une partie de couverture (23) s'étend vers le haut à partir du haut de la partie inférieure (5) pour former un logement monobloc (30) de l'écrou de tuyau (1) et la partie supérieure (7) est logée à l'intérieur de la partie de couverture (23).

13. Écrou de tuyau (1) selon l'une quelconque des revendications 1 à 12, dans lequel la partie inférieure (5), la partie de transition (6) et la partie supérieure (7) du corps d'écrou (3) sont prévues de sorte que la partie de transition (6) est fixée à un angle par rapport à la partie inférieure (5) mais est alignée avec la partie supérieure (7) ; ou
la partie inférieure (5), la partie de transition (6) et la partie supérieure (7) du corps d'écrou (3) sont alignées.

14. Écrou de tuyau (1) selon l'une quelconque des revendications 1 à 13, dans lequel la partie supérieure (7) comporte des filetages internes formés sur la surface intérieure de l'alésage traversant (4) de celle-ci pour un engagement d'accouplement avec les filetages correspondants formés sur l'extérieur de la pomme de douche (27), ou la partie supérieure (7) est adaptée pour être reliée à la pomme de douche (27) par encliquetage.

15. Écrou de tuyau (1) selon l'une quelconque des revendications 1 à 14, comprenant en outre un adaptateur de tuyau (24) relié à la partie inférieure (5) du corps d'écrou (3), permettant ainsi le raccordement de l'écrou de tuyau (1) à différents tuyaux d'eau.

16. Écrou de tuyau (1) selon l'une quelconque des revendications 1 à 15, dans lequel un troisième joint torique (20) est inclus, lequel joint torique est adapté pour être prévu entre l'écrou de tuyau (1) et le tuyau d'eau (2).

17. Écrou de tuyau (1) selon l'une quelconque des revendications 1 à 16, dans lequel une paire de montants (34) s'étendent vers le haut à partir du haut du support (19) et la butée (33) est montée de manière pivotante entre la paire de montants (34) de sorte que, lorsque le bouton (32) est enfoncé, la butée (33) est poussée par le bouton (32) pour pivoter vers le bas, amenant l'au moins une dent (43) de la butée (33) à se dégager de l'évidement (44) sur le fond de la partie supérieure (7).

18. Écrou de tuyau (1) selon la revendication 17, dans lequel la butée (33) comprend une partie en forme d'arc (37) disposée sous la partie supérieure (7), et l'au moins une dent (43) est formée sur un surface intérieure de la partie en forme d'arc (37).

19. Écrou de tuyau (1) selon la revendication 18, dans lequel le mécanisme de verrouillage comprend en outre un ressort (35) comprimé sous la butée (33) pour appliquer constamment une force à la butée (33), de sorte que lorsque le bouton (32) est relâché, la butée (33) est forcée par le ressort (35) de pivoter vers le haut, ce qui amène l'au moins une dent (43) de la butée (33) à s'engager avec l'évidement (44) sur le fond de la partie supérieure (7).

20. Ensemble tuyau d'eau (25) permettant de raccorder un robinet (28) et une pomme de douche (27), comprenant un tuyau d'eau (2) et un écrou de tuyau (1) selon l'une quelconque des revendications 1 à 19, dans lequel l'écrou de tuyau (1) et le tuyau d'eau (2) sont préfabriqués en une seule pièce.

21. Système de douche (26) comprenant :
un ensemble tuyau d'eau (25) selon la revendication 20, une pomme de douche (27) et un dispositif de maintien (10) monté sur une paroi pour accrocher la pomme de douche (27) sur la paroi par une force d'attraction magnétique générée entre l'élément magnétique (8) et le dispositif de maintien (10).

22. Système de douche (26) selon la revendication 21, dans lequel le dispositif de maintien (10) est prévu sous forme d'une barre métallique ou magnétique, ou d'un panneau métallique ou magnétique, de sorte que l'écrou de tuyau (1) peut être fixé de manière coulissante à la barre ou au panneau à différentes hauteurs de la paroi ou à différentes positions de la paroi.

23. Système de douche (26) selon la revendication 22, dans lequel la barre ou le panneau est monté(e) sur la paroi à l'aide d'un adhésif.

24. Système de douche (26) selon la revendication 22 ou 23, dans lequel la barre comporte une fente longitudinale (29) dans laquelle au moins un élément magnétique (8) de l'écrou de tuyau (1) est inséré, guidant ainsi l'écrou de tuyau (1) afin qu'il coulisse dans la fente (29).
